# EUROPEAN PATENT SPECIFICATION

(11) **EP 0 894 907 B1**
(45) Date of publication and mention of the grant of the patent: **09.04.2003**
(21) Application number: 98830344.2
(22) Date of filing: 03.06.1998
(51) Int. Cl.: E04B 1/61, F16B 5/00

(54) **Device for connecting flat elements to each other, namely for the construction of pieces of furniture**
Vorrichtung zum gegenseitigen Verbinden flacher Elemente, insbesondere für den Zusammenbau von Möbelstücken
Dispositif d'assemblage d'éléments plats entre eux, notamment pour l'assemblage des objets d'ameublement

(30) Priority: 30.07.1997 IT FI970189
(43) Date of publication of application: 03.02.1999
(73) Proprietor: Neri, Celso, 57025 Piombino (Livorno) (IT); Neri, Nolberto, 57025 Piombino (Livorno) (IT)
(72) Inventor: Neri, Celso, 57025 Piombino (Livorno) (IT); Neri, Nolberto, 57025 Piombino (Livorno) (IT)
(74) Representative: Bardini, Marco Luigi

(56) References cited:
- EP-A- 0 304 828
- EP-A- 0 744 506
- GB-A- 2 190 407
- US-A- 2 866 239
- US-A- 3 087 586

## Description

The present invention relates to a device for connecting flat elements to each other, namely for the construction of pieces of furniture.

In the handicraft construction of high-value pieces of furniture, namely wardrobes and bookcases, the connections between different component tables, mostly square ones but also between coplanar tables, are at the moment accomplished by means of various kinds of connecting devices.

These devices comprise elements that have to be placed in a number of at least two for each connection, according to the length thereof, suitably spaced along it. Even if these elements can have different structures, they have the common feature of comprising a pin and a clamping block, engageable to each other, which have to be fixed to a respective table to be connected. The pin is orthogonally fixed to a face of one of the tables, usually placed horizontally, for penetrating a cylindrical seat correspondingly formed on the head, i.e. the edge, of the other table and for engaging with the block encased therein. To this purpose the block has a hole, in communication with the above mentioned seat, in which the pin is housed, and comprises a rotating member, which can be operated by means of a hexagonal spanner or the like, the turning of the rotating member axially pulling the pin to gradually draw near the two tables to be joined.

These kinds of connecting elements have a number of drawbacks. First of all the clamping blocks remain in sight on the faces of the respective tables, with an unsatisfactory aesthetic result, in particular in bookcases, in which said faces are visible from the outside of the object. Covering caps can be used, but the aesthetic result is not of a good quality all the same, because differently coloured spots remain in sight on the face.

Furthermore, the tables to be coupled necessarily require a working that, besides being in itself rather difficult, has to be carried out with a very high precision. In fact, to allow the engagement between pins and blocks, each of the seats formed in correspondence to the blocks has to be perfectly coaxial to the respective pin when the two tables are drawn near for the coupling. In the same way, each block has to be placed accurately in order to let also its pin-housing hole be perfectly coaxial to the respective pin. The working is then long and difficult and it often happens that an already worked table has to be set apart because slight inaccuracies make the connection impossible, with a waste of time and money.

US-A-3,087,586 discloses a device for mutually connecting flat elements by which a first element is hooked into a second element. The first element must be lifted vertically to enable hooking.

The object of the present invention is to provide a device for connecting flat elements to each other, namely for the construction of pieces of furniture, which does not present the above described drawbacks, allowing the accomplishment of a connection having satisfactory aesthetic features and chiefly allowing an easy and quick connection.

This object has been achieved with the device for connecting flat elements to each other, namely for the construction of pieces of furniture, according to the present invention, comprising hooking means and locking means, fixable along a common connection axis to a respective of said flat elements and engageable to each other to connect them. The hooking means are fixable inside a groove formed in the respective flat element coaxially to the connection axis and comprise protruding members which extend orthogonally to said axis. The locking means comprise seats for housing said protruding members and define a track in which a tie rod is placed, which is slidable in a parallel way with respect to the connection axis for engaging with the protruding members, operating means for controlling the sliding of the tie rod being provided.

Other characteristics and advantages of the device for connecting flat elements to each other, namely for the construction of pieces of furniture, according to the present invention will be apparent from the following description of one of its embodiments, which is to be intended only as an example and not a limitation with reference to the enclosed drawings, wherein:
- figure 1 shows a perspective view of a connection, not assembled, accomplished by means of the device according to the invention;
- figure 2 is an exploded side view of the device according to the invention;
- figure 3 illustrates a top plan view of a part of a locking element belonging to the device of figure 2;
- figure 4 is a top plan view of a different part of said locking element;
- figure 5 shows a perspective view of a detail of a hooking element of the device of figure 2.

With reference to the above figures, the connecting device according to the invention comprises a hooking element, on the whole indicated at 2, and a locking element, on the whole indicated at 3, both having an axial development and preferably made of a metallic material. The two elements are fixed to a respective flat-shaped body, typically a wood table 1, coaxially to a connection axis X, and are engageable to each other to accomplish the connection between the tables.

Hooking element 2 comprises a plate 5, substantially as long as the connection to be accomplished and less wide than the thinner table to be coupled, as will be made clearer hereinafter. Seats 6 are formed in plate 5 for its fixing via screws, not shown, to the respective table. Hooking tongues 7, each having a cut end according to an oblique chamfer 7a, extend from one face 5a of plate 5, near to the ends thereof. Chamfers 7a of the two tongues define in co-operation with face 5a of plate 5 respective notches 8, faced in the same direction with respect to the longitudinal axis of the plate.

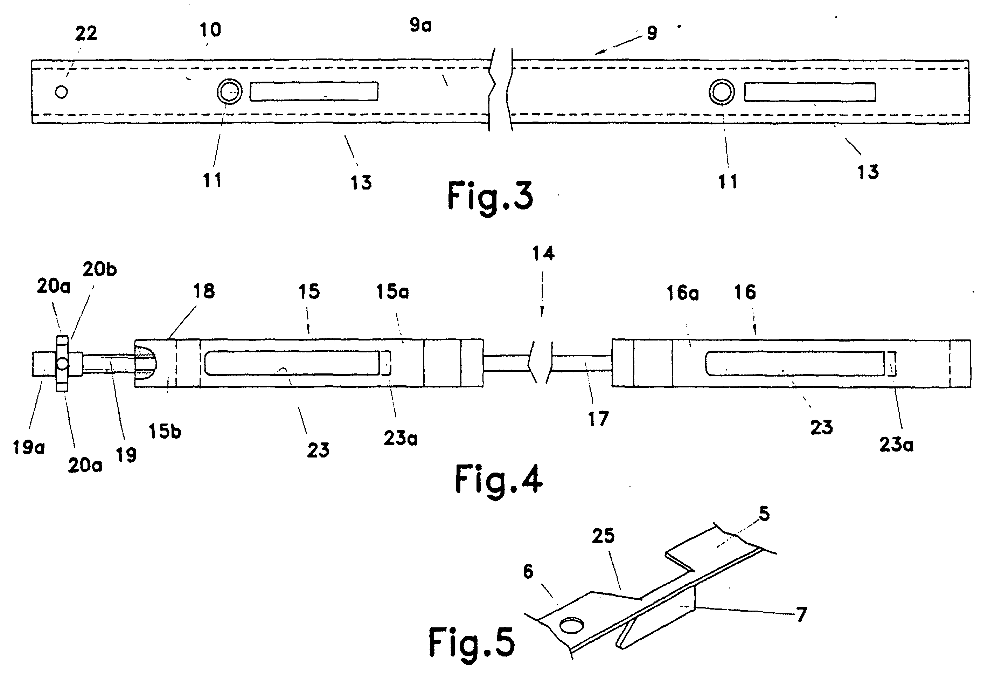

As shown in figure 5, hooking tongues 7 7 can advantageously be made by forming suitable polygonally-outlined cuts 25 in plate 5 and orthogonally bending the strips obtained in this way.

Locking element 3 comprises a stick 9, shown in particular in figure 3, made of a U-shaped channel, internally defining a track 10. Two quadrilateral slots 13 are formed in base 9a of stick 9, which is substantially as long and wide as plate 5, in positions corresponding to those of tongues 7 on plate 5.

A tie rod 14, shown in particular in figure 4, is slidingly placed inside track 10. In the depicted embodiment, rod 14 is made up of a central arm 17, to the ends of which two quadrilateral plates 15 and 16 are integrally connected. Each of plates 15 and 16 has a central section, indicated at 15a and 16a respectively, which is placed in contact with the internal face of base 9a of stick 9. In sections 15a and 16a respective rectangular slots 23 are formed, having substantially the same width of slots 13 and being positionable in correspondence to them to be penetrated by tongues 7 of hooking element 2. Slots 23 have a longer longitudinal development than that of slots 13, to allow the passing through of screws 12, placed in seats 11 adjacent to slots 13, for fixing stick 9 to the respective table. The edge 23a of each slot 23 which is faced towards notch 8 has a slide-assisting chamfer parallel to the respective chamfer 7a of tongue 7, with the function that will be made apparent hereinafter.

Either plate, in the drawings that indicated at 15, has, at the opposite end with respect to arm 17, a thickening 15b with a screwed seat 18, having a parallel axis to the sliding direction of tie rod 14. A bolt 19 is engaged with seat 18 and is provided with a cylindrical head 19a, axially extending from the respective end of stick 9 for the operation of the bolt by means of a suitable spanner, e.g. an hexagonal one.

A stop 20, placed transversally inside track 10, prevents the axial movement of bolt 19 and is connected to stick 9 thanks to the engagement of projections 20a and of a stop pin 20b respectively with notchings 21, laterally formed in stick 9, and a hole 22 in base 9a. In stop 20 a cylindrical seat is centrally formed for the engagement with a circumferential notch of head 19a of bolt 19, which in this way can rotate to control the sliding in both directions of tie rod 14 inside track 10.

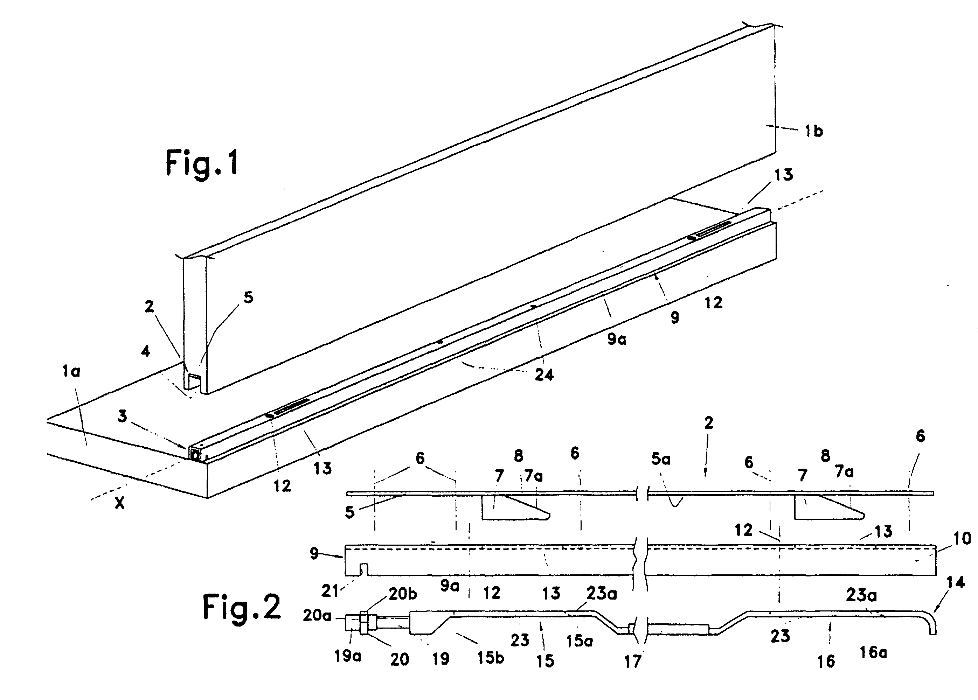

The connecting device according to the invention operates in the following way. It can accomplish a connection having typically the configuration shown in figure 1, in which the two tables to be coupled, indicated at 1a and 1b, have to be orthogonally joined to carry out corners of pieces of furniture, namely wardrobes and bookcases, either table, in the figure that indicated at 1a, being placed horizontally.

Hooking element 2 is fixed inside a quadrilateral section groove 4, preliminarily formed along the coupling edge of either table, in this case and preferably the vertical one 1b, while locking element 3 is fixed via screws 12, base 9a being placed upwards, on a face of the other table along connection axis X.

Then the tables are drawn close, making groove 4 house locking element 3 until tongues 7 engage within slot 13, tie rod 14 being placed inside track 10 in order to allow the penetration of tongues 7 inside slots 23. Once this has happened, the operation of bolt 19 controls the sliding of tie rod 14, supported at its ends by table 1a, towards notches 8, edges 23a of slots 23 penetrating the notches to get into contact with respective chamfers 7a.

Tie rod 14, keeping on sliding, axially pushes tongues 7, making them abut against the edges of slots 13 on the opposite side to notches 8 and causing as a consequence the relative sliding between chamfers 7a and edges 23a, assisted by the chamfered outline of the edges. A tractive force on tongues 7, and so on plate 5, is then generated in a direction orthogonal to the tie rod sliding direction, the force drawing the two tables nearer and nearer until their connections is accomplished.

The device according to the invention will be provided in a large set of different sizes, both in width and length, to allow the accomplishment of different length connections and between tables of different thicknesses. In particular the width of elements 2 and 3 will be chosen so as to result lower than the minimum thickness of the tables to be connected, permitting the carrying out of groove 4. If connections having a particular length have to be accomplished, a number of tongues 7, and consequently of slots 13 and 23, higher than two can be provided.

Advantageously, as in the depicted embodiment, tongues 7, and correspondingly slots 13, can be placed asymmetrically with respect to a median axis orthogonal to connection axis X, to make the reciprocal positioning of hooking element 2 and locking element 3 univocal and quick, when they have to be fixed to the tables to be joined.

Besides, further holes can be formed in base 9a of stick 9 to house fixing screws 24 for a steadier and safer connection between locking element 3 and the respective table.

It will be apparent that the mounting of the elements on the tables can be simply carried out, without involving any problems of reciprocal reference, as it is sufficient to get two corresponding ends of plate 5 and stick 9 close to the respective table edges which limit at one side the connection axis. Once the connection has been accomplished, no parts of the device are in sight and the connection zone has then fully satisfactory aesthetic features.

Though reference was made to a square connection, the device according to the invention is usable also in different angled connections and in particular to accomplish a head-to-head connection between two coplanar tables. In this case locking element 3 has to be placed on the edge of the respective table like hooking element 2.

Even if the connection between flat elements represents the most advantageous use of the device, it can be also used for connecting differently shaped elements or in any case whenever a connection along an axis is necessary.

The foregoing clearly shows that the device according to the invention provides a quite satisfactory solution to the problems which the use of the prior art devices involves, fully achieving the stated object.

Variations and/or modifications can be brought to the device for connecting flat elements to each other, namely for the construction of pieces of furniture, according to the present invention, without departing from the scope of the invention itself as defined by the appended claims.

## Claims

1. A device for connecting flat elements (1a, 1b) to each other, namely for the construction of pieces of furniture, said device comprising hooking means (2) and locking means (3), fixable along a common connection axis (X) to a respective of said flat elements (1a, 1b) and engageable to each other to connect them, **characterised in that** said hooking means (2) are fixable inside a groove (4) formed in the respective flat element (1b), the longitudinal axis of said groove being coaxial with said connection axis (X), and comprise protruding members (7) which extend orthogonally to said axis, said locking means (3) comprising seats (13) for housing said protruding members (7) and defining a track (10) in which a tie rod (14) is placed, which is slidable in a parallel way with respect to said connection axis (X) for engaging with said protruding members (7), operating means (18, 19, 20) for controlling the sliding of said tie rod (14) being provided.

2. The device according to claim 1, wherein said locking means comprise a stick (9) made of a substantially U-shaped channel, in the base (9a) of which said seats (13) are formed, fixable on the respective flat element (1a), slots (23) being formed in said tie rod (14), slidingly placed inside said stick (9), said slots (23) being positionable in correspondence to said seats (13) to allow the housing of said protruding members (7) and engageable with said protruding members (7) owing to the sliding of tie rod (14).

3. The device according to the previous claims, wherein said protruding members (7) have respective oblique chamfers (7a), faced in the same direction with respect to said connection axis (X), owing to the sliding of said tie rod (14) inside said track (10) respective edges (23a) of said slots (23) pushing each chamfer (7a), causing the abutment of said protruding members (7a) on said seats (13) and the consequent traction of said protruding members (7) orthogonally to said connection axis (X), with a relative sliding between said chamfers (7a) and said edges (23a).

4. The device according to the previous claims, wherein each edge (23a) of said slots (23) is cut in a parallel way to the respective chamfer (7a) to assist said relative sliding.

5. The device according to the previous claims, wherein said hooking means (2) comprise a plate (5) fixable to the respective flat element (1b) coaxially to said connection axis (X), said protruding members (7) being made up of plurality of tongues (7) extending from said plate (5) along said axis (X), said tongues having respective ends cut to form said chamfers (7a).

6. The device according to the previous claims, wherein a plurality of polygonal cuts (25) has been formed in said plate (5), each of them generating a strip which is bent to form a respective one of said tongues (7).

7. The device according to the previous claims, wherein said operating means (18, 19, 20) comprise screw means (19) axially fixed inside said stick (9) and coaxially engaging with said tie rod (14).

## Patentansprüche

1. Vorrichtung zum Verbinden flacher Elemente (1a, 1b) miteinander, insbesondere für den Zusammenbau von Möbelstücken, welche Vorrichtung enthält Einhakeinrichtungen (2) und Verriegelungsseinrichtungen (3), die längs einer gemeinsamen Verbindungsachse (X) mit jeweiligen der flachen Elemente (1a, 1b) fixierbar sind und miteinander in Eingriff bringbar sind, um sie zu verbinden, **dadurch gekennzeichnet, dass** die Einhakeinrichtungen (2) innerhalb einer Nut (4) fixierbar sind, die in dem jeweiligen flachen Element (1b) ausgebildet ist, wobei die Längsachse der Nut koaxial mit der Verbindungsachse (X) ist, und Vorstehglieder (7) enthalten, die orthogonal zu der Achse verlaufen, welche Verriegelungseinrichtungen (3) Sitze (13) zum Aufnehmen der Vorstehglieder (7) und Definieren einer Spur (10) enthalten, in welcher ein Haltestab (14) angeordnet ist, der in einer parallelen Weise bezüglich der Verbindungsachse (X) zum Eingriff mit den Vorstehgliedem (7) verschiebbar ist, wobei Bedienungseinrichtungen (18, 19, 20) zum Steuern des Verschiebens des Haltestabes (14) vorgesehen sind.

2. Vorrichtung nach Anspruch 1, wobei die Verriegelungseinrichtungen eine Stange (9) enthalten, die aus einem im wesentlichen U-förmigen Kanal besteht, wobei in der Basis (9a) davon Sitze (13) ausgebildet sind, die auf dem jeweiligen flachen Element (1a) fixierbar sind, wobei Schlitze (23) in dem Haltestab (14) ausgebildet sind, der verschiebbar innerhalb der Stange (9) angeordnet ist, welche Schlitze (23) entsprechen den Sitzen (13) positionierbar sind, um die Unterbringung der Vorstehglieder (7) zu gestatten, und mit den Vorstehgliedern (7) in Eingriff bringbar sind dank der Verschiebung des Haltestabes (14).

3. Vorrichtung nach den vorhergehenden Ansprüchen, wobei die Vorstehglieder (7) jeweilige schräge Phasen (7a) haben, die in dieselbe Richtung bezüglich der Verbindungsachse (X) gewandt sind, wobei dank dem Verschieben des Haltestabes (14) innerhalb der Spur (10) jeweilige Ränder (23a) der Schlitze (23) jede Phase (7a) anschieben, was die Anlage der Vorstehglieder (7) an den Sitzen (13) und das konsequente Ziehen der Vorstehglieder (7) orthogonal zu der Verbindungsachse (X) verursacht bei einem relativen Verschieben zwischen den Phasen (7a) und den Rändern (23a).

4. Vorrichtung nach den vorhergehenden Ansprüchen, wobei jeder Rand (23a) der Schlitze (23) in einer parallelen Weise zu der jeweiligen Phase (7a) geschnitten ist, um das relative Verschieben zu unterstützen.

5. Vorrichtung nach den vorhergehenden Ansprüchen, wobei die Einhakeinrichtungen (2) eine Platte (5) enthalten, die an dem jeweiligen flachen Element (1b) koaxial zu der Verbindungsachse (X) fixierbar ist, wobei die Vorstehglieder (7) aus einer Mehrzahl von Zungen (7) bestehen, die von der Platte (5) längs der Achse (X) verlaufen, welche Zungen jeweilige Enden abgeschnitten haben, um die Phasen (7a) zu bilden.

6. Vorrichtung nach den vorhergehenden Ansprüchen, wobei eine Mehrzahl von polygonalen Schnitten in der Platte (5) ausgebildet wurde, von denen jeder einen Streifen erzeugt, der gebogen wird, um jeweils eine der Zungen (7) zu bilden.

7. Vorrichtung nach den vorhergehenden Ansprüchen, wobei die Bedienungseinrichtungen (18, 19, 20) Schraubeinrichtungen (19) enthalten, die axial innerhalb der Stange (9) fixiert sind und koaxial mit dem Haltestab (14) in Eingriff sind.

## Revendications

1. Dispositif d'assemblage d'éléments plats entre eux (1a, 1b), notamment pour l'assemblage d'objets d'ameublement, ledit dispositif comprenant des moyens d'accrochage (2) et des moyens de blocage (3) aptes à être respectivement fixés sur lesdits éléments plats (1a, 1b) suivant un axe de connexion commun (X) et à s'accoupler les uns aux autres pour les assembler, **caractérisé en ce que** lesdits moyens d'accrochage (2) sont aptes à être fixés à l'intérieur d'une rainure (4) réalisée dans l'un des deux éléments plats (1b), l'axe longitudinal de ladite rainure étant coaxial avec ledit axe de connexion (X), et qu'ils comportent des tenons (7) formant saillie orthogonalement par rapport au dit axe, lesdits moyens de blocage (3) comportant des sièges (13) pour loger lesdits tenons (7) et définissant une glissière de guidage (10) dans laquelle est située une tige d'accouplement (14), qui est apte à coulisser parallèlement au dit axe de connexion (X) pour coopérer avec lesdits tenons (7), étant en outre prévus des moyens d'actionnement (18, 19, 20) pour commander le coulissement de ladite tige d'accouplement (14).

2. Dispositif selon la revendication 1, dans lequel lesdits moyens de blocage comprennent une pièce (9) constituée d'une goulotte sensiblement en forme de U, dans la base (9a) de laquelle lesdits sièges (13) sont réalisés, qui est apte à être fixée sur l'autre élément plat correspondant (1a), des fentes (23) étant réalisées dans ladite tige d'accouplement (14) disposée en coulissement dans ladite pièce (9), lesdits fentes (23) étant aptes à se positionner en correspondance avec lesdits sièges (13) pour recevoir lesdits tenons (7) et à coopérer avec lesdits tenons (7) lors du coulissement de la tige d'accouplement (14).

3. Dispositif selon les revendications précédentes, dans lequel lesdits tenons (7) ont respectivement des chanfreins obliques (7a), dans la même direction que ledit axe de connexion (X), le coulissement de ladite tige d'accouplement (14) dans ladite glissière de guidage (10) permettant aux bords respectifs (23a) des dites fentes (23) de pousser chaque chanfrein (7a) de façon que les tenons (7) viennent buter sur lesdits sièges (13) et en conséquence exercer une traction sur lesdits tenons (7) perpendiculairement au dit axe de connexion (X), par un coulissement relatif entre lesdits chanfreins (7a) et lesdits bords (23a).

4. Dispositif selon les revendications précédentes, dans lequel chaque bord (23a) des dites fentes (23) est découpé parallèlement au chanfrein respectif (7a) pour favoriser ledit coulissement.

5. Dispositif selon les revendications précédentes, dans lequel lesdits moyens d'accrochage (2) comportent une plaque (5) apte à être fixée sur l'élément plat correspondant (1b) coaxialement au dit axe de connexion (X), lesdits tenons (7) étant constitués d'une pluralité de pattes (7) s'étendant à partir de ladite plaque (5) le long du dit axe (X), lesdites pattes ayant des extrémités respectives découpées pour former lesdits chanfreins (7a).

6. Dispositif selon les revendications précédentes, dans lequel des découpes polygonales (25) sont réalisées dans ladite plaque (5), chacune constituant une languette qui est repliée pour former l'une des dites pattes (7).

7. Dispositif selon les revendications précédentes, dans lequel lesdits moyens d'actionnement (18, 19, 20) comportent des moyens de vissage (19) axialement fixés dans ladite pièce (9) et s'associant coaxialement avec ladite tige d'accouplement (14).
